# EUROPÄISCHE PATENTSCHRIFT

(11) **EP 1 364 693 B1**
(45) Veröffentlichungstag und Bekanntmachung des Hinweises auf die Patenterteilung: **16.11.2005**
(21) Anmeldenummer: 03008413.1
(22) Anmeldetag: 11.04.2003
(51) Int. Cl.: B01D 3/20

(54) **Glockenboden**
Bubble cap tray
Plateau à cloche

(30) Priorität: 17.05.2002 DE 10222128
(43) Veröffentlichungstag der Anmeldung: 26.11.2003
(73) Patentinhaber: BASF Aktiengesellschaft, 67056 Ludwigshafen (DE)
(72) Erfinder: Miller, Christian, 67152 Ruppertsberg (DE); Kaibel, Gerd, Dr., 68623 Lampertheim (DE); Kaibel, Björn, 40723 Hilden (DE); Jansen, Helmut, 41542 Dormagen (DE)

(56) Entgegenhaltungen:
- DE-B- 1 043 282
- US-A- 3 693 948

## Beschreibung

Bei Destillationen, Absorptionen, Gaswäschen und ähnlichen verfahrenstechnischen Operationen werden Kolonnen eingesetzt, die Einbauten für den Wärme- und Stoffaustausch zwischen Flüssigkeit und Gas enthalten. Diese Einbauten bestehen entweder aus Böden, wie beispielsweise Glockenböden, Tunnelböden, Siebböden oder Ventilböden, aus regellos angeordneten Füllkörpern, wie beispielsweise Raschigringen, Pallringen oder Sattelkörpern, oder aus geordneten Packungen in verschiedenen geometrischen Ausführungen.

Destillationskolonnen werden auch für Reaktivdestillationen eingesetzt, bei denen in der Kolonne zusätzlich zur destillativen Stofftrennung eine oder mehrere chemische Reaktionen ablaufen. Beispiele hierfür sind Absorptionen, bei denen Halogene, Halogenwasserstoffe, Schwefelwasserstoff, Schwefeldioxid, Kohlendioxid oder Phosgen mit wässrigen alkalischen Lösungen aus dem zugeführten zu reinigenden Gasstrom entfernt werden. Weitere chemische Reaktionen, die sich für Reaktivdestillationen eignen, sind beispielsweise Veresterungen, Verseifungen oder Veretherungen.

Hinsichtlich der konstruktiven Ausführung von Kolonneneinbauten für Reaktivdestillationen ist zwischen homogen und heterogen katalysierten Reaktionen zu unterscheiden. Bei heterogen katalysierten Reaktionen werden die Katalysatoren üblicherweise in Form von Paketen in die Destillationskolonnen eingebaut. Diese Katalysatorpakete können so ausgebildet werden, dass sie direkt als geordnete Trenneinbauten dienen, wie beispielsweise bei dem Typ Multipak der Fa. Montz GmbH, D-40705 Hilden oder dem Typ Katapak der Fa. Sulzer Chemtech AG, CH-8404 Winterthur. Es finden sich auch Bauformen, bei denen die Katalysatorpakete auf Kolonnenböden oder in den Ablaufschächten von Bodenkolonnen untergebracht sind. Entsprechend der Katalysatoraktivität wird die für den jeweiligen Einsatzfall benötigte Katalysatormenge bemessen.

Eine homogen katalysierte Reaktivdestillation gestaltet sich einfacher, wenn eine ausreichend hohe Reaktionsgeschwindigkeit vorliegt. Dies ist meist bei Gaswäschen der Fall, bei denen beispielsweise die Neutralisationsreaktion zwischen dem in der Gasphase enthaltenem Chlorwasserstoff und wässriger Natronlauge mit unmessbar hoher Geschwindigkeit abläuft. Die Dimensionierung einer solchen Reaktivdestillation kann einfach über den Stoffaustauschvorgang erfolgen. Die Einstellung einer bestimmten Verweilzeit für die Flüssigkeit muss wegen der praktisch unendlich hohen Reaktionsgeschwindigkeit bei der Auslegung nicht berücksichtigt werden. Es können beliebige Trenneinbauten, Böden, Füllkörper oder geordnete Packungen eingesetzt werden.

Bei der Auslegung von homogen katalysierten Reaktivdestillationen mit endlich hoher Reaktionsgeschwindigkeit müssen dagegen die Einbauten konstruktiv so ausgelegt werden, dass eine ausreichend hohe Verweilzeit der Flüssigkeit gewährleistet ist. Wegen des begrenzten Flüssigkeitsinhalts in Füllkörperkolonnen oder Packungskolonnen, der bezogen auf das Kolonnenvolumen bei nur 3 bis 4 % liegt, würden oft unwirtschaftlich große und teure Kolonnen resultieren. Man ist daher bei relativ langsam ablaufenden Reaktionen meist gezwungen, Bodenkolonnen einzusetzen, deren Flüssigkeitsinhalt mehr als 5 % beträgt. Unter Flüssigkeitsinhalt versteht man dabei das von der Flüssigkeit ausgefüllte Volumen eines Kolonnenabschnitts bezogen auf das Gesamtvolumen des Kolonnenabschnitts.

Wenn große Flüssigkeitsinhalte realisiert werden müssen, verwendet man üblicherweise Glockenböden in verschiedener konstruktiver Ausgestaltung. Typische Bauformen sind beispielsweise in den Firmenprospekten der Firma Sulzer-Chemtech, Raschig GmbH oder Rauschert GmbH beschrieben. Eine in der Praxis verbreitet eingesetzte Bauform sind sogenannte Thormann-Böden der Fa. Montz GmbH, D-40705 Hilden. Bei dieser Bauart weisen die Glocken einen langgestreckten rechteckigen Querschnitt auf. Mit dieser speziellen Bauform lassen sich hohe Flüssigkeitsstände von 0,5 m und mehr auf den einzelnen Böden realisieren, so dass der Flüssigkeitsinhalt in der Kolonne bis zu 60 % betragen kann.

Bei solch großen Flüssigkeitsständen stellt sich das bisher unbefriedigend gelöste Problem einer gleichmäßigen Begasung des gesamten Flüssigkeitsinhaltes, damit ein guter Stoffaustausch gewährleistet wird. Die im unteren Bereich des Bodens befindlichen Flüssigkeitsanteile werden in der Regel nicht oder nur unvollständig begast. Derartige stagnante Zonen der Flüssigkeit verschlechtern die Verweilzeitverteilung für die Flüssigkeit und führen zu einer Verschlechterung des Verfahrens.

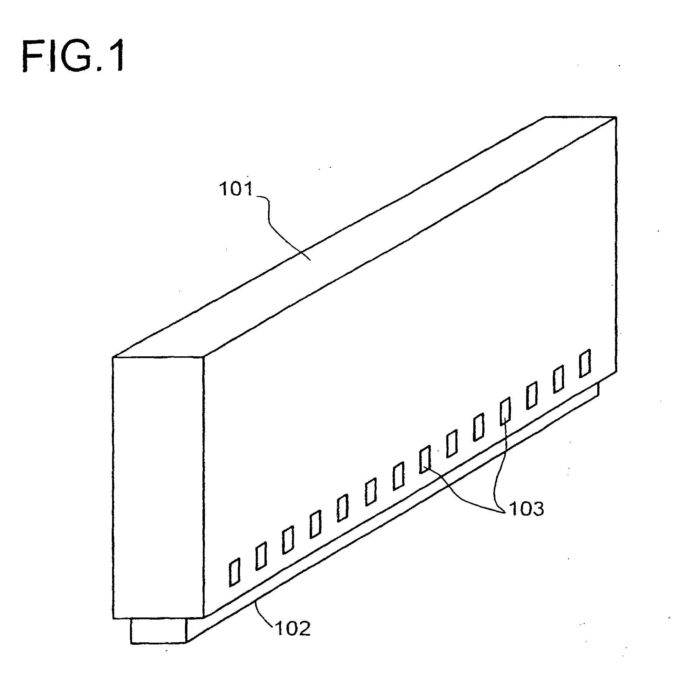

In Figur 1 ist der Ausschnitt eines herkömmlichen Glockenbodens dargestellt. Die Glocke weist einen rechteckigen Querschnitt auf. Die Haube (101) ist über dem Dampfkamin (102) angeordnet. Der Dampfstrom von dem darunter liegenden Boden steigt längs des Höhenvektors über den Dampfkamin (102) auf. Da die Haube (101) nach oben hin geschlossen ist, muss der Dampfstrom im unteren Bereich der Haube über eine Vielzahl von Schlitzen, die in gleichen Abständen in Richtung des Längenvektors zueinander angeordnet sind austreten und durchströmt dabei die umgebende Flüssigkeit auf dem Boden. Der Dampfstrom verteilt sich dabei gleichmäßig über die Länge der Haube. Die unterhalb der Austrittsöffnungen (103) vorhandene Flüssigkeit bewegt sich dabei kaum, da sie nicht von Dampfblasen durchströmt wird und es bildet sich die vorstehend erwähnte stagnante Zone aus.

Es stellte sich somit die Aufgabe, einen verbesserten Verweilzeitboden für Kolonnen zu finden, welcher den genannten Nachteilen abhilft und der auch bei relativ hohen Flüssigkeitsinhalten in der Kolonne eine homogene Begasung der Flüssigkeit gewährleistet. Insbesondere soll in Nähe des Bodens eine gleichmäßige Begasung erzielt werden.

Demgemäß wurde ein Verweilzeitboden in der Bauform eines Glockenbodens mit rechteckigem Querschnitt und einem Verhältnis von Länge zu Breite der Haube des Glockenbodens von 5 bis 50 mit einer Flüssigkeitshöhe auf dem Boden der Kolonne, festgelegt durch die Höhe des Ablaufwehrs, von 0,05 bis 1 m gefunden, bei welchem die Gasaustrittsöffnungen in der rechteckigen Haube ungleichmäßig angeordnet sind.

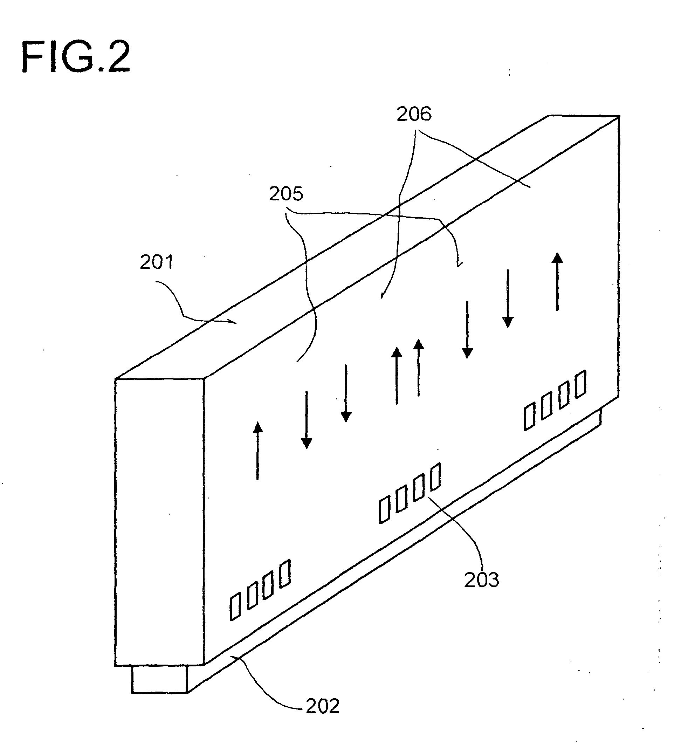

Figur 2 zeigt exemplarisch eine erfindungsgemäße Ausgestaltung. Dabei sind die Gasaustrittsöffnungen (203) ungleichmäßig in Längsrichtung der Haube (201) verteilt. Bevorzugt in periodischen Abständen von etwa 0,1 bis 1m, besonders bevorzugt 0,15 bis 0,3 m liegen Anhäufungen von Gasaustrittsöffnungen (203) vor, zwischen denen sich Abschnitte befinden, in denen bevorzugt keine Gasaustrittsöffnungen (203) vorhanden sind. Bei den Anhäufungen liegt der Abstand zwischen den einzelnen Gasaustrittsöffnungen bevorzugt bei etwa 3 bis 100 mm, besonders bevorzugt bei 10 bis 20 mm. Im Falle einer linearen Anordnung dieser Gasaustrittsöffnungen kann es sich besonders empfehlen, diese in einer Höhe von etwa 5 % bis 95 % der Flüssigkeitshöhe auf dem Boden der Kolonne, festgelegt durch die Höhe des Ablaufwehrs, besonders bevorzugt im Bereich von 10 % bis 70 % der Flüssigkeitshöhe bezogen auf die Bodenhöhe anzuordnen. Im Falle eines zu realisierenden niedrigen Druckverlustes sind die Gasaustrittsöffnungen besonders bevorzugt in einer Höhe von 50 % bis 95 % der Flüssigkeitshöhe auf dem Boden anzuordnen. In Figur 2 ist weiterhin die sich durch die ungleichmäßige Anordnung ergebende Zirkulationsströmung, welche die Begasung entscheidend verbessert, dargestellt (205, 206). Unter der Breite der Zirkulationsströmung versteht man dabei den Abstand, zwischen zwei benachbarten vertikal auf- und absteigenden Flüssigkeitsströmungen in Längsrichtung der Hauben, die sich in Richtung der "langen Seite" des rechteckigen Querschnitts der Haube ergibt.

Der erfindungsgemäße Verweilzeitboden ist hierbei besonders bevorzugt so konzipiert, dass sich die Rotationsachse der im Betrieb ausbildenden Zirkulationsströmung senkrecht zur Längsrichtung - also jener Richtung, in welcher in Fig. 2 die Gasaustrittsöffnungen (203) angeordnet sind - der Haube ausgerichtet ist.

Besonders eignet sich die erfindungsgemäße Vorrichtung beim Einsatz in Kolonnen mit hohem Flüssigkeitsinhalt. Bevorzugt wird die erfindungsgemäße Vorrichtung bei Flüssigkeitsinhalten von etwa 5 % bis 70 %, besonders bevorzugt von 30 % bis 60 % eingesetzt.

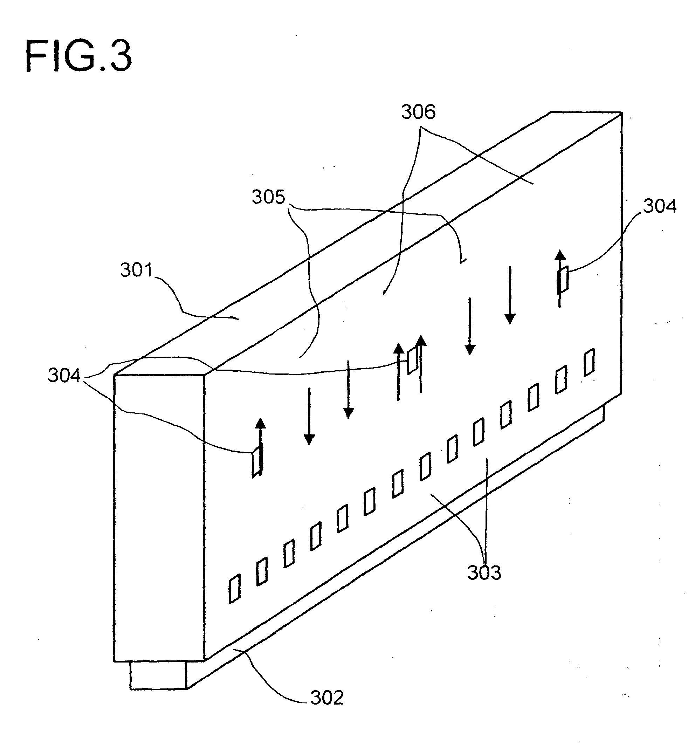

Eine weitere bei großen Füllständen der Flüssigkeit und hohen zulässigen Druckverlusten bevorzugte Ausführungsform ist in Figur 3 dargestellt. Hier sind oberhalb der Gasaustrittsöffnungen (303) zusätzliche Zusatzgasaustrittsöffnungen (304) angeordnet, wobei die Zahl der Zusatzgasaustrittsöffnungen (304) kleiner ist als die Zahl der Gasaustrittsöffnungen (303). Die Zusatzgasaustrittsöffnungen (304) sind bevorzugt in periodischen Abständen von 0,1 bis 1m, bevorzugt 0,15 bis 0,3 m, angeordnet. Bevorzugt sind die Zusatzgasaustrittsöffnungen (304) etwa in einer Höhe von 30 % bis 90 % der Flüssigkeitshöhe auf dem Boden der Kolonne, festgelegt durch die Höhe des Ablaufwehrs, besonders bevorzugt im Bereich von 30 % bis 70 % der Flüssigkeitshöhe oberhalb der Gasaustrittsöffnungen (303) angeordnet.

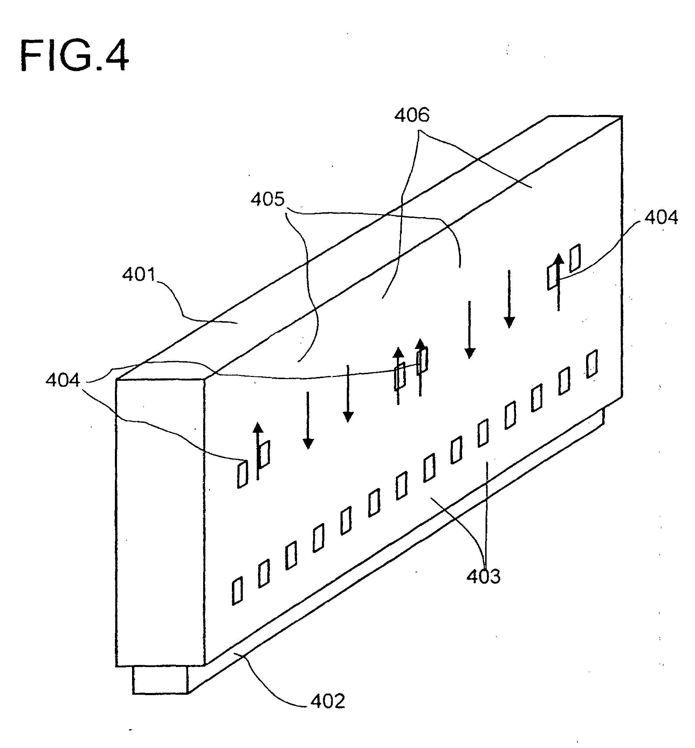

Anstelle einzelner Zusatzgasaustrittsöffnungen können auch, wie in Figur 4 gezeigt, mehrere eng beieinander liegende Zusatzgasaustrittsöffnungen (404) angeordnet sein. Die Abstände der Anhäufungen der Zusatzgasaustrittsöffnungen liegen hierbei bei etwa 0,1 bis 1 m, besonders bevorzugt bei 0,15 bis 0,3 m. Der Abstand zwischen den einzelnen Gasaustrittsöffnungen liegt bei den Zusatzgasaustrittsöffnungen bevorzugt bei etwa 3 bis 100 mm, besonders bevorzugt bei 10 bis 20 mm.

Um einen besonders weiten Belastungsbereich der Böden zu gewährleisten, können in vertikaler Richtung gegebenenfalls weitere Austrittsöffnungen mit niedrigerer Eintauchtiefe angebracht werden.

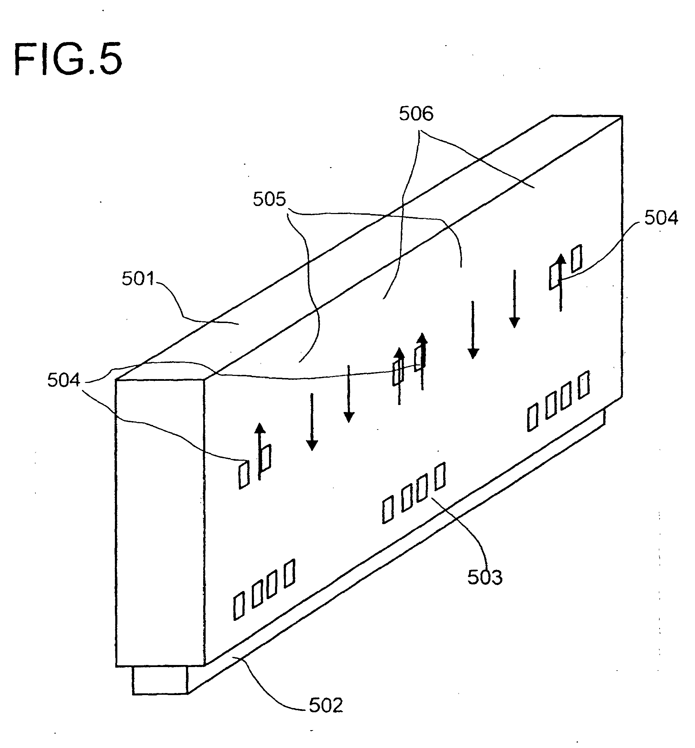

Es kann sich auch besonders empfehlen, wie in Figur 5 gezeigt, sowohl die Gasaustrittsöffnungen (503) als auch die Zusatzgasaustrittsöffnungen (504) in gleichen periodischen Abständen von 0,1 bis 1 m, bevorzugt 0,15 bis 0,3 m anzuordnen, wobei die Anhäufungen beider Austrittsöffnungen jeweils übereinander liegen.

Alternativ zu einer ungleichmäßigen horizontalen Verteilung der Gasaustrittsöffnungen und/oder Zusatzgasaustrittsöffnungen kann es sich auch empfehlen, die Öffnungsflächen dieser Austrittsöffnungen verschieden groß zu wählen. Die Öffnungsflächen können in unterschiedlichen Geometrien ausgeführt werden, beispielsweise auch kreisförmig sein. Besonders geeignete Varianten hängen von den konkreten Umständen ab und können vom Fachmann durch Routineversuche ermittelt werden.

Durch diese ungleiche Verteilung der Austrittsöffnungen werden paarweise Zirkulationsströmungen (z.B. 205 und 206 in Figur 2) induziert, die eine gewünschte Umwälzung der Flüssigkeit auf dem Boden bewirken. Stagnante Zonen, in denen die Flüssigkeit kaum ausgetauscht wird, werden vorteilhafterweise vermieden.

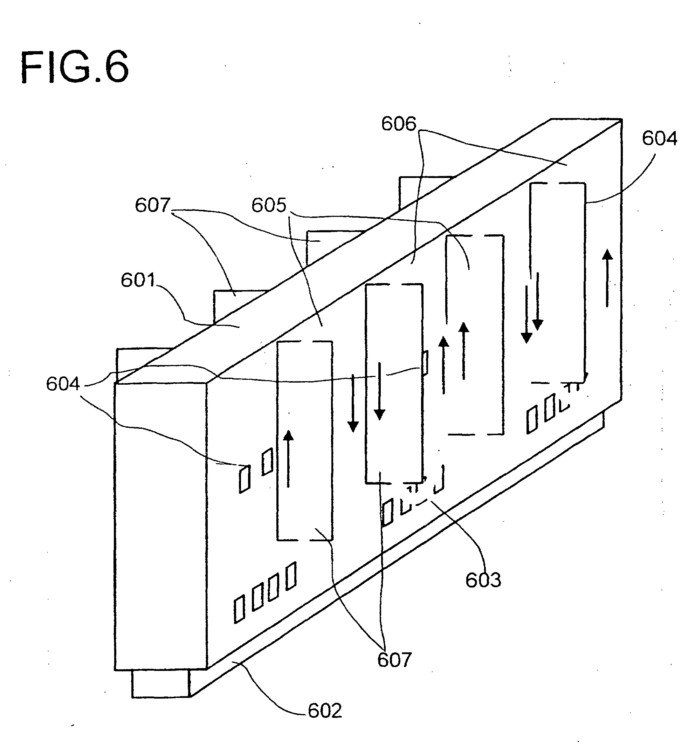

Die Umwälzung der Flüssigkeit kann weiter verbessert werden, wenn an den Hauben (601) Leitbleche (607) angebracht werden, wie in Figur 6 gezeigt. Diese Leitbleche werden bevorzugt in den Bereichen angebracht, in denen die Strömungsrichtungen der Flüssigkeit gegenläufig sind.

Um eine möglichst starke Umwälzung der Flüssigkeit zu erzielen, werden die Gasaustrittsöffnungen (603) und Zusatzgasaustrittsöffnungen (604) sowie die Leitbleche (607) bevorzugt so angeordnet, dass sich die Umwälzungen der Flüssigkeit auf beiden Seiten der Haube (601) sowie bei unmittelbar benachbarten Hauben gleichsinnig angeordnet sind und sich gegenseitig verstärken.

Bevorzugte Anwendungsgebiete für die erfindungsgemäße Vorrichtung sind beispielsweise Absorptionen, bei denen Halogene, Halogenwasserstoffe, Schwefelwasserstoff, Schwefeldioxid, Kohlendioxid oder Phosgen mit wässrigen alkalischen Lösungen aus dem zugeführten zu reinigenden Gasstrom entfernt werden oder homogen katalysierten Acetalisierungen, Acetalspaltungen, Veresterungen, Veretherungen, oder Verseifungen.

Die erfindungsgemäße Vorrichtung ermöglicht eine gleichmäßige Begasung in Bodenkolonnen. Besonders bei hohen Flüssigkeitsinhalten erweist sie sich als vorteilhaft. Sie bietet somit die Möglichkeit, Verfahren verfahrenstechnisch einfacher und wirtschaftlicher auszuüben, wobei Produkte höherer Qualität erzielt werden können.

## Patentansprüche

1. Verweilzeitboden in der Bauform eines Glockenbodens mit rechteckigem Querschnitt und einem Verhältnis von Länge zu Breite der Haube des Glockenbodens von 5 bis 50 mit einer Flüssigkeitshöhe auf dem Boden der Kolonne, festgelegt durch die Höhe des Ablaufwehrs, von 0,05 bis 1 m, wobei die Gasaustrittsöffnungen in der rechteckigen Haube ungleichmäßig angeordnet sind.

2. Verweilzeitboden nach Anspruch 1, wobei die Haube des Glokkenbodens und die ungleichmäßig angeordneten Gasaustrittsöffnungen so angeordnet sind, dass die Rotationsachse der sich hierbei im Betrieb ausbildenden Zirkulationsströmung senkrecht zum in Längsrichtung der Haube, die sich in Richtung der "langen Seite" des rechteckigen Querschnitts der Haube ergibt, parallelen Längenvektor ausgerichtet ist.

3. Verweilzeitboden nach Anspruch 1 oder 2, wobei die Haube des Glockenbodens und die ungleichmäßig angeordneten Gasaustrittsöffnungen so angeordnet sind, dass hierbei im Betrieb die Breite der ausgebildeten Zirkulationsströmungen 0,1 bis 1m, bevorzugt 0,15 bis 0,3 m beträgt.

4. Verweilzeitboden nach Ansprüchen 1 bis 3, wobei die Gasaustrittsöffnungen in horizontaler Richtung ungleich verteilt sind.

5. Verweilzeitboden nach Ansprüchen 1 bis 4, wobei die ungleichmäßig angeordneten Gasaustrittsöffnungen auf den beiden Seiten der Haube gleich ange ordnet sind.

6. Verweilzeitboden nach Ansprüchen 1 bis 5, wobei oberhalb der ungleichmäßig angeordneten Gasaustrittsöffnungen weitere Zusatzgasaustrittsöffnungen angeordnet sind und die Zahl dieser weiteren Zusatzgasaustrittsöffnungen kleiner ist als die der Gasaustrittsöffnungen gemäß Anspruch 1.

7. Verweilzeitboden nach Anspruch 6, wobei die Zusatzgasaustrittsöffnungen periodisch angeordnet sind.

8. Verweilzeitboden in der Bauform eines Glockenbodens mit rechteckigem Querschnitt und einem Verhältnis von Länge zu Breite der Haube des Glockenbodens von 5 bis 50 mit einer Flüssigkeitshöhe auf dem Boden der Kolonne, festgelegt durch die Höhe des Ablaufwehrs, von 0,05 bis 1 m, wobei die Gasaustrittsöffnungen in der rechteckigen Haube unterschiedliche Größen aufweisen.

9. Verweilzeitboden nach Ansprüchen 1 bis 8, wobei an der Haube Leitbleche zur Strömungsführung angebracht sind.

10. Verweilzeitboden nach Ansprüchen 1 bis 9, wobei die Gasaustrittsöffnungen sowie die eventuell vorhandenen Zusatzgasaustrittsöffnungen und Leitbleche so angeordnet sind, dass sich im Betrieb auf beiden Seiten der Haube sowie bei unmittelbar benachbarten Hauben eine gleichsinnige Zirkulationsströmung ausbildet.

11. Verweilzeitboden nach den Ansprüchen 1 bis 10, auf welchem mehrere Hauben angeordnet sind, wobei die Gasaustrittsöffnungen direkt benachbarter Hauben hinsichtlich der die Gasaustrittsöffnungen enthaltenden Fläche gleich angeordnet sind.

## Claims

1. A residence tray constructed as a bubble cap tray having a rectangular cross section and a ratio of length to width of the cap of the bubble cap tray of from 5 to 50 and having a height of liquid on the tray of the column, determined by the height of the discharge weir, of from 0.05 to 1 m, wherein the gas outlet openings in the rectangular cap are arranged nonuniformly.

2. The residence tray according to claim 1, wherein the cap of the bubble cap tray and the nonuniformly arranged gas outlet openings are arranged so that the axis of rotation of the circulation generated in operation is aligned perpendicular to the length vector parallel to the longitudinal direction of the cap, which is defined by the "long side" of the rectangular cross section of the cap.

3. The residence tray according to claim 1 or 2, wherein the cap of the bubble cap tray and the nonuniformly arranged gas outlet openings are arranged so that the width of the circulations generated in operation is from 0.1 to 1 m, preferably from 0.15 to 0.3 m.

4. The residence tray according to any of claims 1 to 3, wherein the gas outlet openings are nonuniformly distributed in the horizontal direction.

5. The residence tray according to any of claims 1 to 4, wherein the nonuniformly arranged gas outlet openings are arranged in the same way on the two sides of the cap.

6. The residence tray according to any of claims 1 to 5, wherein further supplementary gas outlet openings are arranged above the nonuniformly arranged gas outlet openings and the number of these further supplementary gas outlet openings is smaller than that of the gas outlet openings according to claim 1.

7. The residence tray according to claim 6, wherein the supplementary gas outlet openings are arranged periodically.

8. A residence tray constructed as a bubble cap tray having a rectangular cross section and a ratio of length to width of the cap of the bubble cap tray of from 5 to 50 and having a height of liquid on the tray of the column, determined by the height of the discharge weir, of from 0.05 to 1 m, wherein the gas outlet openings in the rectangular cap have different sizes.

9. The residence tray according to any of claims 1 to 8, wherein guide plates to guide the flow are installed on the cap.

10. The residence tray according to any of claims 1 to 9, wherein the gas outlet openings and any supplementary gas outlet openings present and the guide plates are arranged so that the circulation generated in operation on each side of the cap and on directly adjacent caps has the same direction of rotation.

11. The residence tray according to any of claims 1 to 10 on which a plurality of caps are arranged, wherein the gas outlet openings of directly adjacent caps are arranged in the same way on the surface comprising the gas outlet openings.

## Revendications

1. Plateau à temps de séjour sous la forme de construction d'un plateau à cloche présentant une section transversale rectangulaire et un rapport entre longueur et largeur de la calotte du plateau à cloche de 5 à 50 avec un niveau de liquide au fond de la colonne, qui est fixé par la hauteur du déversoir de sortie, de 0,05 à 1 m, les ouvertures de sortie de gaz dans la calotte rectangulaire étant agencées de manière non uniforme.

2. Plateau à temps de séjour suivant la revendication 1, dans lequel la calotte du plateau à cloche et les ouvertures de sortie de gaz agencées de manière non uniforme sont disposées de façon à ce que l'axe de rotation de l'écoulement de circulation qui s'y établit en service soit orienté perpendiculairement au vecteur de longueur parallèle à la direction longitudinale de la calotte qui est obtenue dans la direction du "long côté" de la section transversale rectangulaire de la calotte.

3. Plateau à temps de séjour suivant la revendication 1 ou 2, dans lequel la calotte du plateau à cloche et les ouvertures de sortie de gaz agencées de manière non uniforme sont disposées de façon à ce qu'en service la largeur des écoulements de circulation réalisés soit de 0,1 à 1 m, de préférence de 0,15 à 0,3 m.

4. Plateau à temps de séjour suivant les revendications 1 à 3, dans lequel les ouvertures de sortie de gaz sont réparties de manière inégale dans la direction horizontale.

5. Plateau à temps de séjour suivant les revendications 1 à 4, dans lequel les ouvertures de sortie de gaz agencées de manière non uniforme sont disposées de manière identique sur les deux côtés de la calotte.

6. Plateau à temps de séjour suivant les revendications 1 à 5, dans lequel, au-dessus des ouvertures de sortie de gaz agencées de manière non uniforme, sont disposées des ouvertures de sortie de gaz supplémentaires et le nombre de ces ouvertures de sortie de gaz supplémentaires est plus petit que celui des ouvertures de sortie de gaz suivant la revendication 1.

7. Plateau à temps de séjour suivant la revendication 6, dans lequel les ouvertures de sortie de gaz supplémentaires sont agencées de manière périodique.

8. Plateau à temps de séjour sous la forme de construction d'un plateau à cloche ayant une section transversale rectangulaire et un rapport entre longueur et largeur de la calotte du plateau à cloche de 5 à 50, avec un niveau de liquide au fond de la colonne, qui est fixé par la hauteur du déversoir de sortie, de 0,05 à 1 m, les ouvertures de sortie de gaz dans la calotte rectangulaire présentant des grandeurs différentes.

9. Plateau à temps de séjour suivant les revendications 1 à 8, dans lequel des déflecteurs destinés à guider l'écoulement sont montés sur la calotte.

10. Plateau à temps de séjour suivant les revendications 1 à 9, dans lequel les ouvertures de sortie de gaz ainsi que les ouvertures de sortie de gaz supplémentaires et déflecteurs éventuellement présents sont agencés de façon à ce qu'en service il s'établisse un écoulement de circulation de même sens des deux côtés de la calotte ainsi que dans le cas de calottes directement voisines.

11. Plateau à temps de séjour suivant les revendications 1 à 10, sur lequel plusieurs calottes sont agencées, les ouvertures de sortie de gaz de calottes directement voisines étant agencées de manière identique en ce qui concerne la face contenant les ouvertures de sortie de gaz.
